# EUROPÄISCHE PATENTSCHRIFT

(11) **EP 0 582 257 B1**
(45) Veröffentlichungstag und Bekanntmachung des Hinweises auf die Patenterteilung: **31.03.1999**
(21) Anmeldenummer: 93112369.9
(22) Anmeldetag: 02.08.1993
(51) Int. Cl.: G08G 1/097, G08G 1/07

(54) **Verfahren und Vorrichtung zur Übertragung von Wechselzeicheninformationen**
Method and device for transmitting shift signal information
Procédé et appareil pour transmettre les informations de signalisation cyclique

(30) Priorität: 01.08.1992 DE 4225466; 23.10.1992 DE 4235751
(43) Veröffentlichungstag der Anmeldung: 09.02.1994
(60) Teilanmeldung: 98101718.9
(73) Patentinhaber: Gebert, Franz J., Midrand, Gauteng (ZA); Gebert, Rüdiger H., Midrand, Gauteng (ZA); Gebert, Ralf D.H., Midrand, Gauteng (ZA)
(72) Erfinder: Gebert, Franz J., Midrand, Gauteng (ZA); Gebert, Rüdiger H., Midrand, Gauteng (ZA); Gebert, Ralf D.H., Midrand, Gauteng (ZA)
(74) Vertreter: Schubert, Siegmar, Dipl.-Ing.

(56) Entgegenhaltungen:
- WO-A-92/08215
- DE-A- 4 017 533
- US-A- 4 814 765

## Beschreibung

Die Erfindung betrifft ein Verfahren zur Übertragung von Geschwindigkeitswechselzeicheninformationen nach dem Oberbegriff des Anspruchs 1.

Ein weiterer Aspekt der Erfindung betrifft entsprechende Einrichtungen zur Übertragung von Geschwindigkeitswechselzeicheninformationen gemäß dem Oberbegriff des Anspruchs 8.

Geschwindigkeitsverkehrszeichenanlagen werden nach dem Stand der Technik insbesondere durch Prozeßrechner aufgrund erfaßten Verkehrsaufkommens und/oder gegebenenfalls weiterer Parameter gesteuert. Zur Kontrolle der Einhaltung der verkehrsabhängigen Geschwindigkeitswechselzeichen können übliche Verkehrsüberwachungsanlagen (abgekürzt: Überwachungsanlagen) herangezogen werden. Diese Überwachungsanlagen können direkt und manuell auf die für die Geschwindigkeitszeichenanlagen gesetzten Parameter eingestellt werden, so daß überwacht werden kann, ob die entsprechenden Grenzwerte von den Verkehrsteilnehmern eingehalten werden. Die den Geschwindigkeitswechselzeicheninformationen entsprechenden Wechseldaten werden dabei in den Überwachungsanlagen im Rahmen deren Steuerung gespeichert, um im Falle einer Überschreitung der Grenzwertparameter - Geschwindigkeitsbegrenzungen - zur Beweisführung herangezogen werden zu können. Die Grenzwertparameter werden in diesem Kontext auch als Geschwindigkeitsbegrenzungsparameter bezeichnet. Zu diesem Ziel müssen die Wechseldaten in den Überwachungsanlagen entsprechend den Geschwindigkeitswechselzeicheninformationen, die für die Verkehrsteilnehmer sichtbar sind, geändert werden. Zu diesem Zweck ist denkbar, die Überwachungsanlagen, die von den Geschwindigkeitsverkehrszeichenanlagen entfernt aufgestellt werden, in der Weise zu koppeln, daß die jeweiligen Wechselzeicheninformationen bzw. die entsprechenden Wechseldaten, die zur Steuerung in Geschwindigkeitsverkehrszeichenanlagen über einen Datenbus eingespeist werden, über diesen Datenbus auch die Verkehrsüberwachungsanlagen programmieren, so daß die Grenzwertparameter in den Verkehrsüberwachungsanlagen nach Maßgabe der Geschwindigkeitswechselzeicheninformationen gesteuert werden. Bei einer solchen hard- und softwaremäßigen Ankoppelung der Überwachungsanlagen an die Geschwindigkeitsverkehrszeichenanlagen können jedoch, wie die Erfinder erkannt haben, unerwünschte Systembeeinflussungen über die Datenbusse der Verkehrslenkung auftreten, die im Extremfall zum Zusammenbruch der Datennetze führen können.

Bekannt sind ein Verfahren und eine Einrichtung zur Anzeige des Zustands eines Systems von Verkehrsampeln (US-A-4 814 765). Im Einzelnen werden jeweils an einer Kreuzung Ampeln durch eine Kreuzungsverkehrssteuereinrichtung teilweise abhängig von örtlichen Verkehrsgegebenheiten gesteuert, die von Fahrzeugdetektoren erfaßt werden. Die Steuerungseinrichtungen sind mit einem Hauptverkehrsaderkoordinator und Datenkonzentrator gekoppelt, der nahe der Verkehrsader angeordnet ist und der den Betrieb der Kreuzungsverkehrssteuereinrichtung überwacht und synchronisiert, indem die Verkehrsampelintervalle für einen koordinierten Betrieb eingestellt werden. Ein Personalcomputer mit Bildschirm ist entfernt von der Verkehrsader aufgestellt. Zu ihm werden Daten, die die Zustände der Verkehrsampeln des Systems darstellen, von dem Koordinator und Datenkonzentrator über eine Telefonleitung und Modems als Interface übertragen, um die Zustände des Systems von Verkehrsampeln zu verschiedenen Zykluszeiten für eine Überwachung der Verkehrsampeln anzuzeigen. Die oben geschilderte Hardware der Einrichtung ist konventionell. Zu der Funktion der Einrichtung gehört es dementsprechend, daß der Personalcomputer Zustandsdaten von dem Koordinator und Datenkonzentrator anfordert, die daraufhin in umgekehrter Richtung wie die Anforderung über die Telefonleitung in den Personalcomputer übertragen werden, um in diesem verarbeitet und auf dem Bildschirm graphisch angezeigt zu werden. Diese Vorgänge können sich in Sekundenabständen wiederholen.

Zum Stand der Technik gehört ferner ein Datenübertragungsinterfaceschaltkreis, in dem optische Fasern zur Verbesserung der elektronischen Isolation zwischen einer externen Leitung und einem Endgerät eingefügt sind (Patent Abstracts of Japan, Vol:10, No:302, E-44/5 & JP-A-61 117 953). Dabei ist jeweils ein Ende einer optischen Faser auf eine Fotodiode gerichtet, die über einen Transistor ein- und ausgeschaltet wird, und ein dazu entgegengesetztes Ende der optischen Faser ist auf einen anderen, lichtempflindlichen Transistor gerichtet, der über die optische Faser gesteuert wird. Zwei derartiger optische Faseranordnungen wirken bidirektional.

Der Erfindung liegt die Aufgabe zugrunde, Verkehrsüberwachungsanlagen möglichst zeitgleich wie die Geschwindigkeitsverkehrszeichenanlagen mit den Geschwindigkeitswechselzeicheninformationen bzw. entsprechenden Wechseldaten zu beaufschlagen, jedoch eine störende Beeinflussung der Datenbusse, die primär zur Steuerung der Geschwindigkeitsverkehrszeichenanlagen dienen, auszuschließen.

Die Lösung der Aufgabe besteht in dem in Anspruch 1 gekennzeichneten Verfahren.

In einer Realisierung dieses Verfahrens werden die Geschwindigkeitswechselzeicheninformationen, die normalerweise zur Unterrichtung und Anweisung der Verkehrsteilnehmer von den Geschwindigkeitsverkehrszeichenanlagen angezeigt werden, mittels einer Videokamera aufgenommen, die auf die Geschwindigkeitsverkehrszeichenanlagen gerichtet ist und die beispielsweise auf einem Mast fest montiert ist oder auf einer Brücke steht.

An die dadurch gegebene optische Übertragungsstrecke schließt sich eine Übertragungsstrecke zwischen der Videokamera und den Verkehrszeichenüberwachungsanlagen an, über welche die von der Videokamera abgegebenen, elektrischen Geschwindigkeitswechselzeichensignale bzw. entsprechende Wechseldaten elektrisch über Leitungen oder drahtlos zu den Überwachungsanlagen übertragen werden. Damit erfolgt die praktisch zeitgleiche Übertragung der Geschwindigkeitswechselzeicheninformationen bzw. entsprechender Wechseldaten von der Verkehrswechselzeichenanlage zu den Verkehrsüberwachungsanlagen bei gleichzeitiger galvanischer und datenmäßiger Rückwirkungsfreiheit auf die Geschwindigkeitsverkehrszeichenanlage steuernden Datenbusse.

Bei dem Verfahren nach Anspruch 1 werden die von der Videokamera zu dem Verkehrsüberwachungsanlagen übertragenen elektrischen Geschwindigkeitswechselzeichen, d.h. Geschwindigkeitswechselzeichensignale, in den Überwachungsanlagen mittels Bildverarbeitung (image processing) digitalisiert und als Steuerung der Geschwindigkeitsbegrenzungsparameter der Überwachungsanlagen verwendet, wobei die den Geschwindigkeitswechselzeichensignalen entsprechenden Wechseldaten gespeichert werden.

Nach Anspruch 2 erfolgt die Umsetzung der Ausgangssignale der Videokamera mittels Bildverarbeitung in elektrisch übertragbare Wechseldaten bereits vor deren Übertragung über eine Datenleitung oder eine Telemetriesende- und -empfangsanlage zu den Überwachungsanlagen, wo sie ebenfalls gespeichert werden und zur Steuerung der Geschwindigkeitsgrenzwertparameter der Überwachungsanlagen verwendet werden.

Für jede der beiden Alternativen ergeben sich spezifische Vorteile je nach den eingesetzten Übertragungsmitteln.

Die Umsetzung der Ausgangssignale der Videokamera in elektrisch übertragbare Wechseldaten hat den Vorteil, daß Datenübertragungsmittel eingesetzt werden können, die bei verhältnismäßig geringem Aufwand eine sichere und schnelle Wechseldatenübertragung zu den Überwachungsanlagen gewährleisten.

Bei der erstgenannten Alternative erfolgt diese Digitalisierung durch Bildverarbeitung dagegen erst in den Übertragungsanlagen selbst, so daß die Videoausgangssignale der Videokamera oder hieraus als Zwischenstufe kodierte Daten übertragen werden können.

Die Wechseldaten bzw. elektrisch kodierten Geschwindigkeitswechselzeicheninformationen können sowohl über (Daten-) Leitungen als auch drahtlos zwischen den Geschwindigkeitsverkehrszeichenanlagen und den Überwachungsanlagen übertragen werden.

Als Videokamera kann eine Videochipkamera eingesetzt werden.

Eine Einrichtung zur Übertragung der Geschwindigkeitswechselzeicheninformationen, die von Geschwindigkeitsverkehrszeichenanlagen abgegeben werden, zu Verkehrsüberwachungsanlagen, in Ausübung der voranstehend beschriebenen erfindungsgemäßen Verfahren, weist erfindungsgemäß die in dem kennzeichnenden Teil des Anspruchs 8 angegebenen Merkmale auf.

Zweckmäßig und vorteilhafte Ausgestaltungen dieser Einrichtung sind in den Ansprüchen 9 bis 12 angegeben.

Die mit den Einrichtungen erzielten Vorteile ergeben sich aus den Vorzügen der voranstehend geschilderten Verfahren, die mit den Einrichtungen in technisch wenig aufwendiger Weise durchgeführt werden.

Ausführungsbeispiele der erfindungsgemäßen Einrichtungen werden im folgenden anhand einer Zeichnung mit zwei Figuren erläutert, in denen dargestellt sind:
- Fig. 1: ein stark vereinfachtes Blockschaltbild einer Einrichtung zur Übertragung von Geschwindigkeitswechselzeicheninformationen, in welcher die Bildverarbeitung in den Verkehrsüberwachungsanlagen erfolgt, und
- Fig. 2: eine Einrichtung, ebenfalls als vereinfachtes Blockschaltbild, in welcher die Bildverarbeitung der Geschwindigkeitswechselzeicheninformationen vor der Übertragung von dem Standort einer Videokamera zu der Verkehrsüberwachungsanlage erfolgt.

Es ist in den Ausführungsbeispielen jeweils nur eine Verkehrsüberwachungsanlage dargestellt, obwohl von einer Geschwindigkeitsverkehrswechselzeichenanlage mehrere Verkehrsüberwachungsanlagen gesteuert werden können.

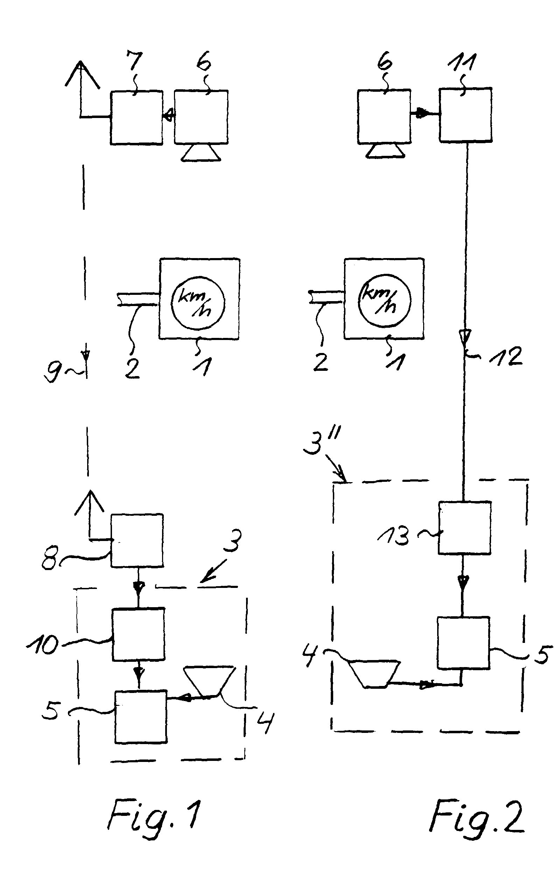

In den Fig. 1 und 2 sind übereinstimmende Teile mit übereinstimmenden Bezugszeichen versehen.

In den Fig. 1 und 2 ist mit 1 eine Geschwindigkeitsverkehrszeichenanlage bezeichnet, die über einen Datenbus 2 gesteuert wird. Der Datenbus kann von einem nicht dargestellten Prozeßrechner zur Verkehrslenkung gespeist werden. Die Einhaltung der von den Verkehrsteilnehmern sichtbaren Geschwindigkeitswechselzeicheninformationen erfolgt durch eine Überwachungseinrichtung, die generell mit 3 bezeichnet ist im wesentlichen aus einer Sonde 4 und einem Steuerungsteil 5 besteht. Der Begriff Überwachungseinrichtung wird synonym zu Überwachungsanlage gebraucht. Die Sonde kann durch Fahrbahnkontakte, Verkehrsmeßkabel, Lichtschranken, Mikrowellen, Funkschranken oder Rückstrahlgeräte realisiert sein.

Der Steuerungsteil ist so aufgebaut, daß er Wechseldaten entsprechend den Geschwindigkeitswechselzeicheninformationen speichern und in Geschwindigkeitsbegrenzungsparameter umsetzen kann, deren Einhaltung durch die Überwachungseinrichung kontrolliert wird. Die Steuerungseinrichtung umfaßt Dokumentationsmittel, mit denen signifikante Abweichungen von den Geschwindigkeitsbegrenzungsparametern festgehalten werden. Insoweit ist die Überwachungseinrichtung üblicher Bauart.

Zur Übertragung der Geschwindigkeitswechselzeicheninformationen von Geschwindigkeitsverkehrszeichenanlage 1 zu der beispielsweise 200 m entfernt aufgestellten Überwachungseinrichtung dient folgende Einrichtung:

Eine Videochipkamera 6 ist bezüglich der Geschwindigkeitsverkehrszeichenanlage 1 so aufgestellt, daß sie die Geschwindigkeitsverkehrswechselzeichen erfaßt und aufnimmt. In ihr werden die Geschwindigkeitsverkehrsinformationen in elektrische Ausgangssignale, Videosignale, umgesetzt. Mit einem Ausgang der Videochipkamera ist ein Funksender 7 verbunden, eine mit den Videosignalen modulierte Hochfrequenz (HF, UHF, VHF oder SHF) ausstrahlt, vorzugsweise zu einem Funkempfänger 8 gerichtet, der zum Empfang auf der von dem Sender abgestrahlten Frequenz und in der gewählten Modulationsart geeignet ist. Die Funkübertragungsstrecke ist mit der unterbrochenen Linie 9 angedeutet. Ein Ausgang des Funkempfängers 8 ist zu einem Eingang der Überwachungseinrichtung 3 geführt, die hier eine Bildverarbeitungseinrichtung 10 umfaßt. In der Bildverarbeitungseinrichtung werden die von dem Funkempfänger 8 empfangenen und demodulierten Signale in Wechseldaten entsprechend den Geschwindigkeitswechselzeicheninformationen umgesetzt. Mit den Wechseldaten werden die übrigen Komponenten der Überwachungseinrichtungen zur Steuerung der Geschwindigkeitsbegrenzungsparameter und zur Speicherung beaufschlagt.

Die Einrichtung zur Übertragung der Geschwindikeitsverkehrswechselinformationen gemäß Fig. 2 unterscheidet sich folgendermaßen von der voranstehend beschriebenen Einrichtung nach Fig. 1:

Mit dem Ausgang der Videochipkamera ist eine Bildverarbeitungseinrichtung 11 verbunden, mit welcher praktisch an dem Aufstellungsort der Videochipkamera die Bildverarbeitung der aufgenommenen Geschwindigkeitswechselzeicheninformationen in Wechseldaten durchgeführt wird. Die Wechseldaten werden über eine Datenleitung 12 zu einer Schnittstelle 13 einer Verkehrsüberwachungseinrichtung 3" übertragen, die hier keine Bildverarbeitungseinrichtung aufweist, da die Bildverarbeitung bereits vor der Übertragung der Wechseldaten zu der Überwachungseinrichtung erfolgte. Die von der Schnittstelle 13 in die Komponenten der Überwachungsanlage insbesondere in den Steuerteil 5 eingespeisten Wechseldaten werden auch dort wieder gespeichert und in Geschwindigkeitsbegrenzungsparameter umgesetzt. Die übrige Arbeitsweise der Überwachungseinrichtung 3" ist im wesentlichen die gleiche wie voranstehend diejenige der Überwachungseinrichtung 3 und konventioneller Natur.

Die erfindungsgemäßen Verfahren können somit mit wenigen zusätzlichen technischen, an die Verfahren angepaßten Mitteln durchgeführt werden.

Zu den in den Varianten der Einrichtung zur Übertragung von Geschwindigkeitswechselzeicheninformationen und den damit ausgeübten Verfahren wird definiert, daß unter der Bezeichnung "Geschwindigkeitswechselzeicheninformationen" Informationen über vorgegebene, den Verkehrsteilnehmern angezeigte Geschwindigkeitsgrößen verstanden werden, welche von den Verkehrsteilnehmern zu beachten, d.h. einzuhalten sind. Hingegen sollen hierunter keine Verkehrsampelsignale verstanden werden, zumal deren Informationsgehalt gering ist.

Die Übertragung der Geschwindigkeitswechselzeicheninformationen dient zur Geschwindigkeitsdatenerfassung.

## Patentansprüche

1. Verfahren zur Übertragung von Geschwindigkeitswechselzeicheninformationen, welche von Geschwindigkeitsverkehrszeichenanlagen (1) für Verkehrsteilnehmer sichtbar abgegeben werden, zu räumlich getrennten Verkehrsüberwachungsanlagen (3,3"), in denen sie gespeichert und in Geschwindigkeitsbegrenzungsgrenzwertparameter umgesetzt werden, wobei die Geschwindigkeitsverkehrszeichenanlage (1) von einem Datenbus (2,2') gesteuert wird,
**dadurch gekennzeichnet,**
daß die sichtbaren Geschwindigkeitswechselzeicheninformationen mittels einer Videokamera (6) aufgenommen werden, in elektrische Geschwindigkeitswechselzeichen umgesetzt werden, anschließend zu den Verkehrsüberwachungsanlagen (3) übertragen werden und dort mittels Bildverarbeitung in Geschwindigkeitsbegrenzungsgrenzwertparameter umgesetzt werden, wodurch die Übertragung der Geschwindigkeitswechselzeicheninformationen von der Geschwindigkeitsverkehrszeichenanlage (1) zu den Verkehrsüberwachungsanlagen (3,3") galvanisch entkoppelt und in einer Weise erfolgt, in welcher der Steuerungsablauf in den Verkehrsüberwachungsanlagen (3,3") nicht auf den Datenbus (2,2') rückwirkt.

2. Verfahren nach Anspruch 1,
**dadurch gekennzeichnet,**
daß die sichtbaren Geschwindigkeitswechselzeicheninformationen, die mittels der Videokamera (6) aufgenommen werden und in elektrische Geschwindigkeitswechselzeichensignale umgesetzt werden, anschließend bereits vor Übertragung zu den Verkehrsüberwachungsanlagen (3") mittels Bildverarbeitung in elektrisch übertragbare Wechseldaten umgesetzt werden, die zu den Verkehrsüberwachungsanlagen (3") übertragen werden und in diesen gespeichert und in Geschwindigkeitsbegrenzungsgrenzwertparameter umgesetzt werden.

3. Verfahren nach Anspruch 1,
**dadurch gekennzeichnet,**
daß die von der Videokamera (6) abgegebenen Geschwindigkeitswechselzeichensignale über eine Leitung zu der Verkehrsüberwachungsanlage (3) übertragen werden.

4. Verfahren nach Anspruch 1,
**dadurch gekennzeichnet,**
daß die von der Videokamera (6) abgegebenen Geschwindigkeitswechselzeichensignale nach Modulation eines Trägers drahtlos zu einem mit der Verkehrsüberwachungsanlage (3) gekoppelten Empfänger (8) übertragen werden.

5. Verfahren nach Anspruch 2,
**dadurch gekennzeichnet,**
daß die Wechseldaten über eine Datenleitung (12) zu der Verkehrsüberwachungsanlage (3") übertragen werden.

6. Verfahren nach Anspruch 2,
**dadurch gekennzeichnet,**
daß die Geschwindigkeitswechseldaten über einen Telemetriesender, der mit der Videokamera (6) in Verbindung steht, sowie über einen Telemetrieempfänger, der mit der Verkehrsüberwachungsanlage verbunden ist, übertragen werden.

7. Verfahren nach einem der Ansprüche 1 - 6,
**gekennzeichnet durch**
die Verwendung einer Videochipkamera (6).

8. Einrichtung zur Übertragung von Geschwindigkeitswechselzeicheninformationen, die von Geschwindigkeitsverkehrszeichenanlagen abgegeben werden, zu Verkehrsüberwachungsanlagen, zur Durchführung des Verfahrens nach Anspruch 1,
**dadurch gekennzeichnet,**
daß eine Videokamera (6) auf die Geschwindigkeitsverkehrszeichenanlage (1) gerichtet ist und daß ein Ausgang der Videokamera (6) mit Übertragungsmitteln (7,9; 12) verbunden ist, die in Verbindung mit einer Empfangseinrichtung (8; 13), an welcher von der Geschwindigkeitsverkehrszeichenanlage (1) räumlich entfernte Verkehrsüberwachungsanlagen (3,3") angeschlossen sind, die von der Videokamera (6) abgegebenen Geschwindigkeitswechselzeichensignale zu den Verkehrsüberwachungsanlagen (3,3") übertragen.

9. Einrichtung nach Anspruch 8,
**dadurch gekennzeichnet,**
daß die Übertragungsmittel eine elektrische Leitung (12) umfassen.

10. Einrichtung nach Anspruch 8,
**dadurch gekennzeichnet,**
daß die Übertragungsmittel einen Funksender, der mit dem Ausgang der Videokamera (6) in Verbindung steht, sowie einen an diesen angepaßten Funkempfänger, der an einen Eingang der Verkehrsüberwachungseinrichtung (3) angeschlossen ist, umfassen.

11. Einrichtung nach Anspruch 8,
**dadurch gekennzeichnet,**
daß die Übertragungsmittel eine Datenleitung (12) zwischen der Bildverarbeitungseinrichtung (11) und der Verkehrsüberwachungseinrichtung (3") umfassen.

12. Einrichtung nach Anspruch 8,
**dadurch gekennzeichnet,**
daß ein Ausgang der Bildverarbeitungseinrichtung mit einem Telemetriefunksender in Verbindung steht und daß ein hieran angepaßter Telemetriefunkempfänger an einen Eingang der Verkehrsüberwachungseinrichtung angeschlossen ist.

## Claims

1. Process for the transmission of variable speed traffic sign data, visibly displayed to motorists by speed traffic sign installations (1), to spatially separate traffic monitoring systems (3, 3"), wherein they are stored and converted into speed limiting threshold parameters, the speed traffic sign installation (1) being controlled by a data bus (2, 2'),
**characterised in that**
the visible variable speed message sign data are recorded by means of a video camera (6) and are transformed into electric variable speed message signs, subsequently being transmitted to the traffic control installations (3) and converted there into speed limiting border value parameters by means of image processing, whereby the transmission of the variable speed traffic sign data is galvanically isolated from the traffic control systems (3, 3") and is performed in a manner in which the control sequence in the traffic control systems (3, 3") has no effect on the data bus (2, 2').

2. Process according to claim 1,
**characterised in that**
the visible variable speed traffic sign data, recorded by means of the video camera (6) and converted into electric alternating speed traffic signals, are subsequently converted, prior already to transmission to the traffic control systems (3"), into electrically transferable alternating data which are transmitted to the traffic control systems (3"), where they are stored and converted into speed limiting threshold parameters.

3. Process according to claim 1,
**characterised in that**
the variable speed traffic signals made available by the video camera (6), are transmitted to the traffic control system (3) by way of a line.

4. Process according to claim 1,
**characterised in that**
the variable speed traffic signals released by the video camera (6), after modulation of a carrier, are transmitted in wireless manner to a receiver (8) coupled to the traffic control system (3).

5. Process according to claim 2,
**characterised in that**
the variable data are transmitted to the traffic control system (3") via a data line (12).

6. Process according to claim 2,
**characterised in that**
the variable speed traffic data are transferred via a telemetric transmitter which is in communication with the video camera (6) as well as via a telemetric receiver which is connected to the traffic control system.

7. Process according to any one of claims 1 to 6,
**characterised by**
the use of a video chip camera (6).

8. Apparatus for transmitting variable speed traffic sign data, made available by speed traffic sign installations, to traffic control systems for carrying out the process according to claim 1,
**characterised in that**
a video camera (6) is pointed towards the speed traffic sign installation (1) and that an output of the video camera (6) is connected to transmission means (7,9; 12), which, in communication with a receiver device (8; 13), to which traffic control systems (3, 3'), spatially remote from the speed traffic sign installation (1) are connected, transmit the variable speed traffic signals, released by the video camera (6), to the traffic control systems (3, 3").

9. Apparatus according to claim 8,
**characterised in that**
the transmission means comprise an electric line (12).

10. Apparatus according to claim 8,
**characterised in that**
the transmission means comprise a radio transmitter, communicating with the output of the video camera (6), as well as a radio receiver adapted thereto, connected to an input of the traffic control system (3).

11. Apparatus according to claim 8,
**characterised in that**
the transmission means comprise a data line (12) between the image processing means (11) and the traffic control system (3").

12. Apparatus according to claim 8,
**characterised in that**
an output of the image processing means communicates with a telemetric radio transmitter and that a telemetric radio receiver, adapted thereto, is connected to an input of the traffic control system.

## Revendications

1. Procédé de transfert d'informations portant sur la vitesse variable du trafic, affichées de façon visible aux usagers de la route au moyen des panneaux de signalisation du trafic (1), à des installations de contrôle du trafic (3, 3") distantes. Elles y sont mises en mémoire et converties en paramètres de vitesses maximales afin de limiter la vitesse. L'installation de contrôle du trafic (1) est contrôlée par un bus de données (2, 2'),
caractérisé en ce que
les informations portant sur la vitesse variable du trafic, sont enregistrées au moyen d'une caméra vidéo (6). Elles sont transformées en signaux électriques de vitesse variable, transmises par la suite aux installations de contrôle du trafic (3). Elles y sont converties en paramètres de valeurs limites de vitesse par traitement d'images. Le transfert d'informations issues du réseau de signalisation routière est isolé galvaniquement des installations de contrôle du trafic (3, 3") et se réalise de manière à ce que la séquence dans les installations de contrôle du trafic (3, 3") n'ait aucun effet sur le bus de données (2, 2').

2. Procédé selon la revendication 1,
caractérisé en ce que
les informations portant sur la vitesse variable du trafic, enregistrées au moyen de la caméra vidéo (6) et converties en signaux électriques caractéristiques de la vitesse du trafic, sont par la suite - et cela déjà avant le transfert aux installations de contrôle (3"), transformées en données de valeurs variables. en mesure d'être transmises électriquement aux installations de contrôle. Elles y sont stockées et converties en paramètres de valeurs limites de vitesse.

3. Procédé selon la revendication 1,
caractérisé en ce que
les signaux caractérisant les vitesses variables récoltées par la caméra vidéo (6), sont transmis à l'installation de contrôle du trafic (3) par un câble.

4. Procédé selon la revendication 1,
caractérisée en ce que
les signaux caractérisant les vitesses variables récoltées par la caméra vidéo (6), sont transmis, après modulation d'une porteuse, à un récepteur sans fil (8), relié à une installation de contrôle du trafic (3),.

5. Procédé selon la revendication 2,
caractérisé en ce que
les données de valeurs variables sont transmises à l'installation de contrôle du trafic (3") par une ligne dédiée au transfert de données (12).

6. Procédé selon la revendication 2,
caractérisé en ce que
les données portant sur la vitesse variable du trafic sont transmises par un émetteur télémétrique, en communication avec la caméra vidéo (6), ainsi que par un récepteur télémétrique, connecté à l'installation de contrôle du trafic.

7. Procédé selon l'une quelconque des revendications 1 - 6,
caractérisé par
l'emploi d'une caméra vidéo à puce (6).

8. Dispositif pour le transfert d'informations portant sur la vitesse variable du trafic, obtenues à partir des panneaux de signalisation de vitesse, à des installations de contrôle du trafic pour réaliser le procédé selon la revendication 1,
caractérisé en ce
qu'une caméra vidéo (6) est orientée vers l'installation d'affichage de vitesse du trafic (1) et qu'une sortie de la caméra vidéo (6) est connectée aux moyens de transfert (7, 9; 12), en communication avec un moyen de réception (8; 13) auquel sont connectées des installations de contrôle du trafic (3, 3"), distantes de l'installation d'affichage de vitesse du trafic (8; 13). L'installation d'affichage de vitesse du trafic (8; 13) transmet aux installations de contrôle du trafic (3, 3") les signaux caractérisant la vitesse variable, mis à disposition par la caméra vidéo (6).

9. Dispositif selon la revendication 8,
caractérisé en ce que
les moyens de transfert comportent une ligne de transfert de données électrique (12).

10. Dispositif selon la revendication 8,
caractérisé en ce que
les moyens de transfert d'informations comportent un radio-émetteur, en communication avec la sortie de la caméra vidéo (6), ainsi qu'un radio-récepteur, adapté au radio-émetteur, connecté à une entrée de l'installation de contrôle du trafic (3).

11. Dispositif selon la revendication 8,
caractérisé en que
les moyens de transfert comportent une ligne de transfert de données (12) entre le dispositif de traitement d'images (11) et l'installation de contrôle du trafic (3").

12. Dispositif selon la revendication 8,
caractérisé en ce
qu'une sortie du dispositif de traitement d'images est en communication avec un radio-émetteur télémétrique et qu'un radio-récepteur télémétrique, y correspondant, est connecté à une entrée de l'installation de régulation du trafic.
